# EUROPEAN PATENT APPLICATION

(11) **EP 1 136 707 A2**
(43) Date of publication of application: **26.09.2001**
(21) Application number: 01302684.4
(22) Date of filing: 22.03.2001
(51) Int. Cl.: F16B 33/00, F16B 13/12

(54) **Holding element for fastening components to a carrier provided with an opening**

(30) Priority: 24.03.2000 DE 10014688
(71) Applicant: EMHART INC., Newark, Delaware 19711 (US)
(72) Inventor: Courdais, Thierry, 94380 Bonneuil sur Marne (FR); Saltenberger, Reimar, 35641 Schoffengrund-Niederwetz (DE)
(74) Representative: Harries, Simon George

(57) **Abstract**

Holding element (1) for fastening components (18,29) to a carrier (4) provided with an opening (3), which holding element penetrates and wherein it is held. An insertion piece (2) penetrating the opening (3) and comprising a longitudinal bore (8) is applied by a collar (5) supported at its one end against the carrier and by a thrust face formed at its other end against a thrust part (11). When a screw penetrating the insertion piece and insertable into the thrust part (11) is tightened, the thrust part radially widens the insertion piece and in a sealing manner anchors the holding element in the opening.

## Description

The invention relates to a holding element for fastening components to a carrier provided with an opening, which the holding element penetrates and wherein it is held.

Such a holding element is known from European patent application 890 750 A2. Said holding element is constructed integrally in the manner of a plug. It has a flange applied against the one side of a carrier and a shank, which penetrates the opening and into which a screw is insertable. For receiving the screw, flange and shank are provided with a coaxial bore. Formed adjacent to the flange on the shank is a bead, the distance of which from the side of the flange directed towards it corresponds to the thickness of the relevant carrier. The holding element is introduced into the opening in the carrier and, because of a suitable diameter of the opening, the bead is compressed radially inwards until the flange comes to rest against the carrier. In said position of the holding element, the bead may spring back out into its original position so that the carrier to a certain extent is caught by the flange and the bead. When a screw is then inserted into the holding element, said screw exerts a radially outwardly directed pressure upon the gap between flange and bead so that in said region the shank is applied in a tightly sealing manner against the wall of the opening. By means of the screw any component may be fastened to the flange, namely in that during insertion of the screw into the shank the screw head presses the component, which is provided with a suitable hole, against the flange. The pressure force and hence the closeness of said connection depends on the elasticity of the material of the shank, for which a material which is not too soft should be selected, otherwise the screw would not be supported securely in the shank. Furthermore, a difficulty for assembly of the holding element is its compression during insertion into the carrier in the region of the bead, for which purpose a soft material would be particularly suitable but, as mentioned above, would not provide adequate support for a screw.

The object of the invention is to provide a holding element according to the initially indicated features, which may easily be provided on a carrier and, given high stability relative to a screw to be inserted and hence a good support function for a component to be fastened, guarantees secure mounting and sealing relative to the carrier. Said object is achieved by an insertion piece, which penetrates the opening and comprises a longitudinal bore and at its one end a collar supported against the carrier and at its other side a thrust face, against which a counterpart face of a thrust part, which is a continuation of the insertion part and is opened by boring coaxially relative to the longitudinal bore, lies in such a way that, when a screw penetrating the insertion piece and insertable into the thrust part is tightened, the thrust part radially widens the insertion piece and in a sealing manner anchors the holding element in the opening, wherein the thrust part is made of a material having the stability of a rigid plastics material and the insertion piece is made of an, in contrast, soft elastic material in the manner of an elastic plastics material.

The two-piece construction of the holding element and the matching configuration of insertion piece and thrust part result, on the one hand, in ease of assembly because there is no need to provide a bead or the like on the insertion piece on account of widening of the latter by the thrust part. The holding element in terms of its external contour may therefore be substantially smooth, thereby allowing it to be inserted without difficulty into the opening of a carrier. The matching configurations of insertion piece and thrust part, upon tightening of a screw and hence pressing of the thrust part against the insertion piece, lead to a strong radial pressure in the region of the insertion piece which, because of its elastic properties, may be applied snugly and securely against the wall of the opening in the carrier and therefore seals the latter in a particularly reliable manner. Said particular elasticity of the insertion piece does not impair the tight fit of a screw inserted into the holding element because said screw is inserted into the thrust part which is made of more rigid material, with the result that a component pressed against the holding element by the screw may be attached securely and firmly to the carrier via the holding element.

The thrust face on the insertion piece advantageously takes the form of a conical widening of the longitudinal bore in a direction away from the collar, into which widening the thrust part projects with a counterpart cone. When the screw is tightened, the counterpart cone is drawn into the conical widening of the insertion piece, with the result that the insertion piece is pressed with considerable expansion force against the wall of the opening in the carrier.

It is also possible to form on the insertion piece, between the collar and the thrust part, an elastic ring which embraces a collar of the thrust part projecting into said ring. Given said construction the collar ensures that, when the elastic ring is compressed as a result of tightening of the screw, the ring may expand only radially outwards where it then presses against the wall of the opening in the carrier.

The collar of the insertion piece is advantageously designed in the manner of a dish, namely with a marginal lip for application against the carrier. Such a construction of the collar gives rise, on the one hand, to efficient sealing between the holding element and the carrier and, on the other hand, to a stable abutment relative to the component to be fastened, which is pressed towards the collar by means of the screw.

In order to achieve an anti-loss combination of the insertion piece and the thrust part into a holding element, the insertion piece is advantageously connected to the thrust part by elastically deformable ribs. Said ribs may be provided at random points in the region of the contact zone of insertion piece and thrust part, e.g. at the outer edge of the widening of the thrust part, where they may be injection-moulded onto the insertion piece and thrust part.

Insertion piece and thrust part are advantageously injection-moulded from plastics material and, as stated above, a particularly elastic plastics material is to be selected for the insertion piece. During injection-moulding of the holding element both the extremely elastic insertion piece and the, in contrast, more rigid thrust part may be formed in one mould, in which case the ribs connecting the two parts may be moulded on at the same time.

Embodiments of the invention are illustrated in the drawings. Said drawings show:
Fig. 1 a holding element comprising insertion piece and thrust part, which cooperate via conical faces, introduced into a carrier,
Fig. 2 the same holding element with a screw inserted therein and a component fastened thereto,
Fig. 3 a holding element with cooperating, flat faces on the insertion piece and thrust part.

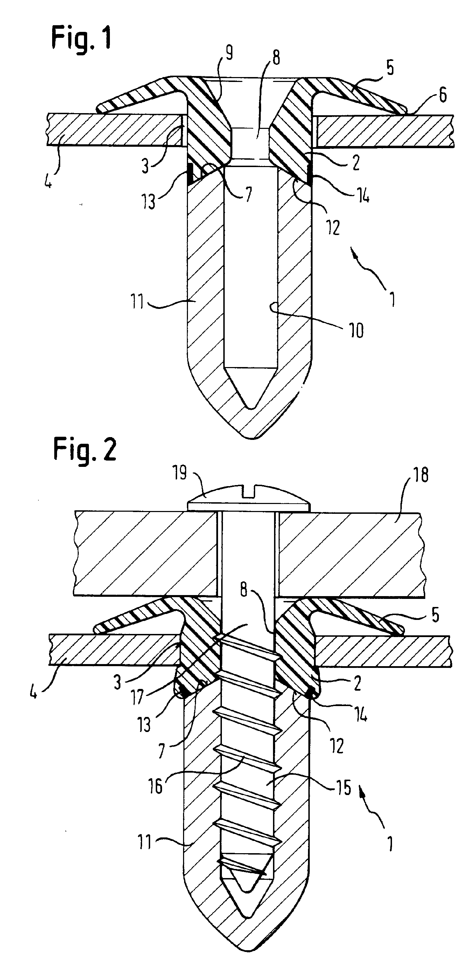

The holding element 1 shown in Fig. 1 comprises the plug-like thrust part 11 and the insertion piece 2, which penetrates the opening 3 in the carrier 4. The carrier 4 here comprises a plate, into which the, in the present case, round opening 3 is introduced. The insertion piece 2 at its one end has the dish-like collar 5, which is supported by its marginal lip 6 on the relevant surface of the carrier 4. At its end remote from the collar 5 the insertion piece has the conical widening 7. The insertion piece 2 contains the longitudinal bore 8, which in the direction of the collar 5 forms the lead-in cone 9 which facilitates the introduction of a screw, a process which is described in detail further below in connection with Fig. 2. The thrust part 11 has the bore 10, which extends coaxially with the longitudinal bore 8. At its end directed towards the insertion piece 2 the thrust part 11 has the counterpart cone 12, which fits together with the conical widening 7.

The two parts forming the holding element 1, namely insertion piece 2 and thrust part 11, are moulded from different materials and therefore form two pieces. To hold the two pieces together so as to prevent loss, the webs 13 and 14 bridging the conical faces 7 and 12 are provided, which are fastened on the one hand to the insertion piece 2 and on the other hand to the thrust part 11 and hence establish a connection between insertion piece 2 and thrust part 11. The two ribs 13 and 14 are made of elastic material so that they do not prevent a mutual displacement of the conical faces 7 and 12. More details of this are provided further below.

As Fig. 1 reveals, the holding element 1 may be introduced without difficulty into the opening 3 in the carrier 4 because on the holding element 1 there are no projections whatsoever impeding said insertion.

Fig. 2 shows the same holding element 1 only with a screw 15 inserted. The screw 15 has the self-cutting thread 16, which has cut into the wall of the bore 10 of the thrust part 11 (see Fig. 1) and is therefore anchored in the thrust part 11. The shank 17 of the screw 15 has considerably widened the longitudinal bore 8 of the insertion piece 2 because the longitudinal bore 8, as shown in Fig. 1, has a much smaller diameter than the bore 10 in the thrust part 11. Because of the elastic properties of the insertion piece 2, its part penetrating the carrier 4 may be pressed outwards so that the outer wall of the insertion piece 2 is applied against the inner wall of the opening 3 in the carrier 4. The screw 15 moreover exerts upon the thrust part 11 a pull in the direction of the insertion piece 2, more details of which will be provided further below. As a result, the counterpart cone 7 of the thrust part 11 presses against the conical widening 12 of the insertion piece 2 so that, because of the conical faces pressing one against the other, the part of the insertion piece 2 adjacent to the conical widening 12 is pressed strongly outwards, with the result that the part of the insertion piece 2 projecting down beyond the carrier 4 bulges outwards in a bead-like manner. The result is a particularly reliable sealing of the opening 3 by means of the insertion piece 2.

The previously mentioned pull upon the thrust part 11 arises on account of the support of the component 18 on the collar 5 of the insertion piece 2, wherein the component 18 is pressed towards the collar 5 by the head 19 of the screw. When the screw 15 is tightened, the pressure exerted by the screw head 19 upon the component 18 leads to fastening of the latter to the holding element 1 and at the same time to the previously mentioned pull upon the thrust part 11 by means of the thread 16, which in turn leads to the previously mentioned spreading of the relevant region of the insertion piece 2.

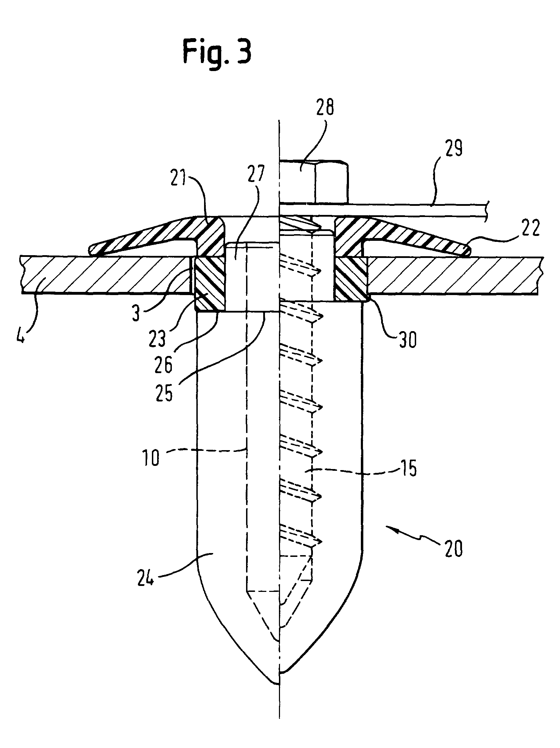

Fig. 3 shows a variant compared to the embodiment according to Figs. 1 and 2. The holding element 20 shown here comprises the insertion piece 21 with the collar 22 as well as the elastic ring 23, which fills the region of the opening 3 in the carrier 4. The collar 22 and the ring 23 are injection-moulded one on the other and therefore form one part. Set onto the ring 23 is the thrust part 24, which presses with a radial, flat face 25 against the bottom flat face 26 of the ring 23. The thrust part 24 verges via the face 25 into the collar 27, which is mounted like a tubular piece on the thrust part 24. The thrust part 24 with the collar 27 moreover comprises the bore 10 provided for receiving a screw.

The left part of Fig. 3 shows the holding element 20 in inserted position (corresponding to the position according to Fig. 1), in which the holding element 20 is introduced loosely into the opening 3. The right part of Fig. 3 shows how the ring 23 is compressed so as to be applied against the wall of the opening 3. This is effected by means of the screw 15, which with its screw head 28 presses the component 29, here a thin plate, against the collar 22 so that, in the manner described in connection with Fig. 2, the thrust part 24 is pulled in the direction of the collar 22 and in the process compresses the elastic ring 23. The ring 23 is in said case not only applied against the inner wall of the opening 3, it also forms the bead 30 which ensures a particularly efficient sealing between the holding element 20 and the component 4. Otherwise, for the mode of operation of the holding element 20 reference is made to the description pertaining to Fig. 2.

## Claims

1. Holding element for fastening components to a carrier provided with an opening, which the holding element penetrates and wherein it is held, **characterised by** an insertion piece, which penetrates the opening and comprises a longitudinal bore and at its one end a collar supported against the carrier and at its other end a thrust face, against which a counterpart face of a thrust part, which is a continuation of the insertion part and is opened by boring coaxially relative to the longitudinal bore, lies in such a way that, when a screw penetrating the insertion piece and insertable into the thrust part is tightened, the thrust part radially widens the insertion piece and in a sealing manner anchors the holding element in the opening, wherein the thrust part is made of a material having the stability of a rigid plastics material and the insertion piece is made of an, in contrast, soft elastic material in the manner of an elastic plastics material.

2. Holding element according to claim 1 **characterised in that** the thrust face of the insertion piece is formed by a conical widening of the longitudinal bore in a direction away from the collar, into which conical widening the thrust part projects with a counterpart cone.

3. Holding element according to claim 1 **characterised in that** formed on the insertion piece, between the collar and thrust part, is an elastic ring which embraces a collar of the thrust part projecting into said ring.

4. Holding element according to one of claims 1 to 3, **characterised in that** the collar is designed in the manner of a dish with a marginal lip for application against the carrier.

5. Holding element according to one of claims 1 to 4, **characterised in that** the insertion piece and the thrust part are connected to one another by elastically deformable ribs.
